# EUROPEAN PATENT APPLICATION

(11) **EP 2 796 358 A1**
(43) Date of publication of application: **29.10.2014**
(21) Application number: 14382062.9
(22) Date of filing: 25.02.2014
(51) Int. Cl.: B62M 9/16

(54) **Tensioning device for a secondary transmission**

(30) Priority: 23.04.2013 ES 201330487 U
(71) Applicant: Vertigo Motors, S.L., 08184 Palau Solita i Plegamans (ES)
(72) Inventor: Forrellad Vives, Joan, 08184 PALAU SOLITA I PLEGAMANS (ES)
(74) Representative: Morgades y Manonelles, Juan Antonio

(57) **Abstract**

The invention refers to a device for adjusting the tension of a motorcycle chain, the chain being the transmission element between two rotating shafts; that of the motorcycle engine output and the rear wheel axle.

## Description

### Object of the Invention.

The invention refers to a device for adjusting the tension of a motorcycle chain, the chain being the transmission element between two rotating shafts; that of the motorcycle engine output and the rear wheel axle.

Transmission between the engine and the wheel is called "secondary transmission".

### State of the Art.

There are different types of tensioners for motorcycle chains on the market that can be considered as state of the art, which span from eccentric shafts to support plates at the rear, or supported on eccentric washers.

In any case, whatever tensioning device is used, the user or mechanic must regularly check for correct alignment of the rear wheel, as well as chain tension. When the chain stretches as a result of the strain it is subject to, the sprocket and crown teeth wear, losing material as a result of the increase of chain pitch.

When the user, or mechanic checks the state of the chain, it is possible to measure the distance between a fixed number of links, checking that the distance does not exceed that established by the manufacturer, and then proceed to tension the chain, according to the type of tensioner used.

The most commonly used are the so-called eccentric tensioners, whose name comes from the control of the distance between the shafts being adjustable by eccentric elements located on the motorcycle rear wheel axle.

Tensioning devices for secondary transmission originated from the time when transmission designs using flat belts began to be inadequate to transmit the power of the engines, because the pulleys slipped. To avoid this slipping, chain drive formed by a collection of links was introduced.

Each link is formed by a pair of pins rigidly connected to two side plates as well as rollers and bushes.

The links are joined with side plates and can rotate around the roller pins, so that although movement in the plane of the roller shafts is not possible, it is possible in transversal direction. In this manner, the assembly with links and side plates, forms a chain which can be as long as needed, and may form a closed unit, when the last link is joined to the first.

The transmission of movement generated by a motorcycle combustion engine and the transformation of up and down movement into circular movement, must be transferred from the engine to the rear wheel, in order to move the motorcycle. Transmission will then be carried out between two shafts: the engine and the rear wheel axle.

Normally, original motorcycle chains have all their links riveted, optionally there can also be original equipment incorporating a removable link, in this case, one side plate, instead of being riveted at both ends, is only riveted at one end, the opposite side plate being secured with a circlip open at one of its ends. To maintain a specific distance, called pitch, there are two pins in the rollers, which are also responsible for holding the link plates, which are secured on inner rollers.

There are different types of chains on the market and several standard sizes. Chain measurement is established by the pitch, which is the distance between two consecutive roller centres. To work, the chain needs round flat plates with teeth called sprockets if they on the wheel pulling the chain or crown wheel if they are on the pulled wheel. In the case of motorcycles designed for all-terrain use, there are special crown wheels, made either of light alloy, such as duraluminium, or with special features, such as anti-mud models with grooves to drain away mud.

### Scope of the Invention.

Facilitating the adjustment of the wheel and chain in a quick and effective manner, just by turning a tool inserted into the device in one of its ends.

The problem with chains, which is solved with the object of the invention, occurs when the stresses transmitted are very high, causing wear in the sprockets, and general stretching of the chain. In addition, for the chain to do its work and not wear prematurely, the only thing needed is for the two sprockets to be in the same plane, so that the chain always operates in a straight line. If this is not the case, either because the shafts are not parallel, or because the teeth are out of alignment, the chain is subject to additional stresses apart from those of traction and ends up stretching.

The tensioning device presented in this invention comprises a cylindrical body or shaft, with a threaded area on one end and a head for adjusting the chain on the other.

Two cams are fitted onto the cylindrical body, one on each end, with means to immobilise them on the shaft using grooves in one end of the cylindrical body and in its lateral surface, and similar grooves on the sides of the adjustment head, which fit into grooves on the inside of the holes in the cams that are fitted to each end of the cylindrical body.

One of the cams is a flat plate with a spiral perimeter and a hole machined the centre, with grooves.

The other cam is a flat plate, with a cylindrical coaxial projection from one side, which fits onto the adjustment head. In its central area, this projection has a hole with grooves and slides onto the adjustment head that is also grooved, but it also has a flange so that the cam cannot become detached from the adjustment head.

Other details and characteristics shall be shown throughout the description below referring to drawings attached to this report which are shown for illustrative but not limiting purposes only in a drawing of the invention.

### Description of the drawings.

Below is a list of the different parts of the invention, that are indicated in the drawings with their respective numbers; (10) tensioning device, (11) cylindrical body, (12) right end, (13) threaded area, (14) slots, (15) left end, (16) adjustment head, (17) slots, (18) recess, (19) cam, (20) cam, (21) hole of the cam, (22) hole of the crown, (23) circular crown, (24) projections, (25) grooves, (26) washer, (27) nut, (28 and 28') stops.
Figure 1 is a perspective view of the tensioning device (10), with the cams (19-20) at each end (12-15) and with a nut (26) and washer (27).
Figure 2 is an enlarged view of Figure 1, with the sectioned cylindrical body (11).
Figure 3 is a plan view of the cylindrical body (11) with the adjustment head (16) at one end (15) and a threaded area (13) and slots (14) on the opposite end (12).
Figure 4 is an exploded perspective view of the device assembly (10).

### Description of a preferred embodiment of the invention.

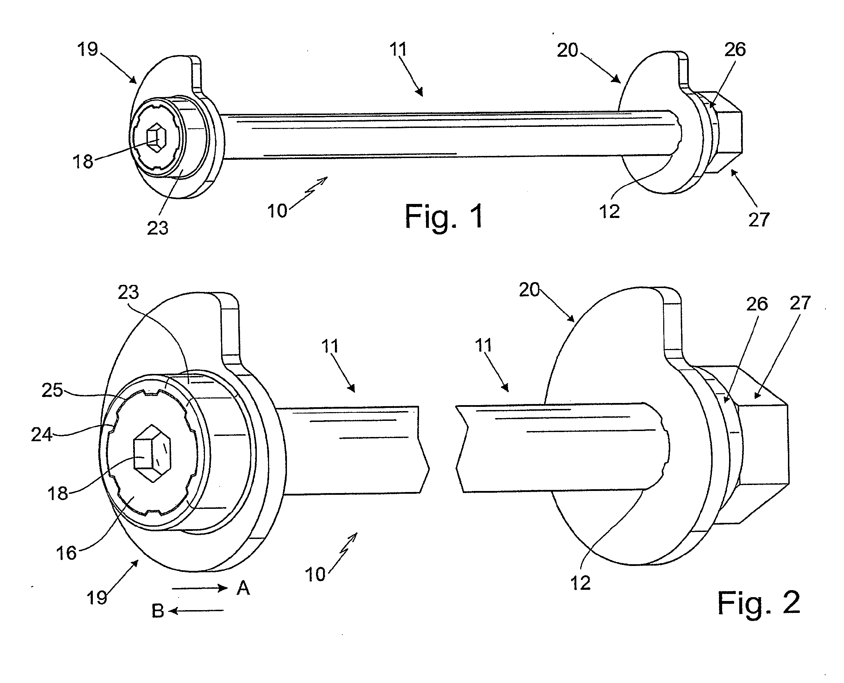

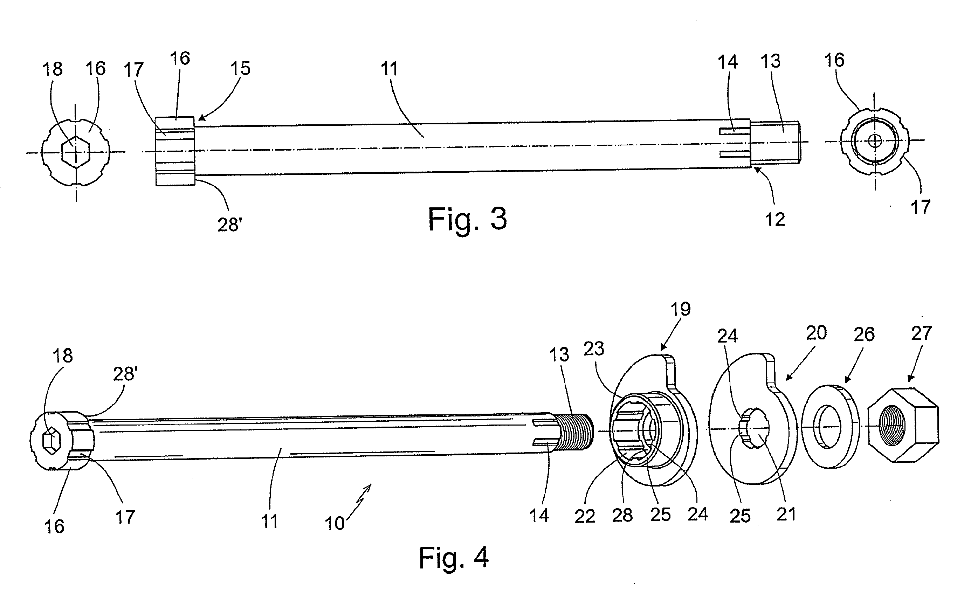

In the preferred embodiment of the invention, as may be seen in Figures 1, 2 and 4, the tensioning device (10) comprises a cylindrical body (11), on the right end (12) of which there is a threaded area (13), and next to the end (12) there are parallel slots (14), while on the other end (15) there is an adjustment head (16) (see Figure 3) preferably cylindrical, with some slots (17) on its sides and with a stop (28').

The cylindrical body (11) of the tensioning device (10) holds both cams (19-20), each of which has a hole (21-22) that fits onto the body (11).

The cam (19) is fitted to the cylindrical body (11) and to the adjustment head (16), the body of one cam (19) having a circular projecting crown (23) whose inner surface has a series of projections (24) and grooves (25) that will slide onto the slots (17) in the sides of the adjustment head (16), which, to facilitate the operation of the tensioning device (10), has a machined recess (18) for inserting the corresponding tool to rotate (10) and so adjust the corresponding wheel and chain (not shown in the drawings).

The cam (20) fits onto the cylindrical body (11) by means of a hole (21) and the projections (24) in the perimeter of the hole (21) fit onto the slots (14) of the shaft (11), stopping the cam (20) from becoming detached by the use of a nut (27) and washer (26).

The tensioning device (10) with all its parts, as can be seen in Figure 4, is inserted into the corresponding elongated slots in the motorcycle swinging arm, the device (10) also acting as the wheel axle as well as for alignment.

To tension the chain, the correct tool is inserted into the recess (18) in the adjustment head (16) and the assembly (10) is loosened by loosening the nut (27) on the other end (13) of the shaft, the mechanic or the user may move the cams (19) and (20) as necessary, in the direction of arrows A on the left end (15), after rotate turning them (19-20) in the direction of arrows B and A respectively, the cams being secured by the slots (17) on the adjustment head (16), working in collaboration with projections (24) and grooves (25) on the cam (19), and by the slots (14), projections (24) and grooves (25) of the hole (21) of the cam (19) on the right end (12) of the shaft. The stop (28') on the adjustment head (16) impedes the cam (19) from detaching from the head (16).

Finally the mechanic or the user, with the corresponding tool, turns the tensioning device (10) in the recess (18), in this manner in contrast to the current state of the art, it is only necessary to act on the left hand side (15), facilitating wheel alignment and chain tensioning (not shown in the drawings).

Having sufficiently described this invention using the attached drawings, it is understood that any modification may be made to the detail which may be deemed to be appropriate, whenever these changes do not alter the essence of the invention summarised in the following claims.

## Claims

**1. "TENSIONING DEVICE FOR A SECONDARY TRANSMISSION"** used in motorcycle rear wheels with the aim of aligning the wheel and tensioning the chain of the secondary transmission, said device being located on slots in the motorcycle swinging arm, the tensioning device also acting as the rear wheel axle, **characterised in that** the tensioning device has a cylindrical body or shaft, on one end of which there is a threaded area, while on the other there is an head for adjusting the chain, one cam being located on each end of the shaft, with means to immobilise them on the shaft.

**2. "TENSIONING DEVICE FOR A SECONDARY TRANSMISSION"** according to the claim 1, **characterised in that** the cams are immobilised on the shaft with combination of slots on one end and projections and grooves on the other end, which work with the respective grooves and projections in the cam holes.

**3. "TENSIONING DEVICE FOR A SECONDARY TRANSMISSION"** according to the claim 1, **characterised in that** after the threaded area of the corresponding end of the shaft there are some slots on the surface of the shaft, and in the opposite end, on the adjustment head, there are some parallel projections and grooves, with the corresponding stop, and in the central area of the adjustment head there is a recess for inserting a specific tool.

**4. "TENSIONING DEVICE FOR A SECONDARY TRANSMISSION"** according to the claim 1, **characterised in that** the cam fitted to the threaded end has a hole in its centre, the inner perimeter of which has a series of projections and grooves.

**5. "TENSIONING DEVICE FOR A SECONDARY TRANSMISSION"** according to the claim 1, **characterised in that** the cam fitted to the adjustment head has a coaxial circular crown on one side, which has a series of parallel projections and grooves.

**6. "TENSIONING DEVICE FOR A SECONDARY TRANSMISSION"** according to the claim 1, **characterised in that** on the threaded end of the shaft there is a washer and a nut.
